# EUROPEAN PATENT SPECIFICATION

(11) **EP 4 465 398 B1**
(45) Date of publication and mention of the grant of the patent: **25.02.2026**
(21) Application number: 24175501.6
(22) Date of filing: 13.05.2024
(51) Int. Cl.: H01M 10/04, B65H 75/00

(54) **WINDING APPARATUS AND METHOD FOR WINDING ONE OR MORE STRIP-SHAPED SEPARATORS AND ELECTRODE FOILS TOGETHER**
VORRICHTUNG UND VERFAHREN ZUM WICKELEN VON EINEM ODER MEHREREN STREIFENFÖRMIGEN SEPARATOREN UND ELEKTRODENFOLIEN
DISPOSITIF ET PROCEDE D'ENROULEMENT D'UN OU PLUSIEURS SEPARATEURS EN FORME DE BANDE ET DE FEUILLES D'ELECTRODES

(30) Priority: 16.05.2023 IT 202300009891
(43) Date of publication of application: 20.11.2024
(73) Proprietor: G.D S.p.A., 40133 Bologna (BO) (IT)
(72) Inventor: NOFERINI, Giacomo, I-40133 Bologna (BO) (IT)
(74) Representative: Porta & Consulenti Associati S.p.A.

(56) References cited:
- EP-B1- 1 155 466
- WO-A1-2023/275909

## Description

The present invention refers to winding apparatus for winding one or more strip-like separators and electrode foils together and to a method for winding one or more strip-like separators and electrode foils together.

The present invention is particularly usable in a process for making electrochemical cells, for example secondary electrochemical cells, comprising electrodes separated from each other by a dielectric separator. The present invention may also be used in a process for making electrical capacitors.

One type of electrochemical cells, called jelly roll or Swiss roll, provides that a strip-like separator is interposed between two electrode foils, in particular an anode and a cathode, and that the multilayer composed of separator and electrode foils is wound to form an electrochemical cell of cylindrical or almost cylindrical shape.

In the Applicant's experience, in order to make this type of electrochemical cells, winding apparatuses are used that provide a winding mandrel rotatable about its own longitudinal axis. Free ends of the electrode foils and of the strip-like separator are associated with the winding mandrel which is rotated about its own longitudinal axis causing the winding of the electrode foils and of the separator between them and on the winding mandrel. The strip-like separator and the electrode foils are continuously unwound from respective reels.

In the Applicant's experience, in order to feed the electrode foils and the strip-like separator to the winding mandrel, it is possible to arrange winding apparatuses that provide for winding pieces of electrode foils and a piece of strip-like separator on respective temporary collecting rollers and to bring said temporary collecting rollers at a respective winding mandrel where the free ends of the electrode foils and of the strip-like separator are associated with the winding mandrel. The winding mandrel is driven in rotation making the jelly roll type winding of the electrode foils and of the strip-like separator.

In particular, it is possible to provide a plurality of collecting groups mounted on a rotating member with continuity about a respective rotation axis. It is also possible to provide a loading station in which four transfer rollers (arranged tangent to the periphery of the rotating member) respectively receive two electrode foils and two separator strips and transfer pieces of the two electrode foils and of the two separator strips to four collecting rollers of the same collecting group.

This operation can be performed by making the transfer rollers integral with an oscillating frame hinged to the rotation axis of the rotating member and by making the rotation axes of two collecting rollers movable with respect to the rotation axes of the other two collecting rollers of the same group. During the rotation of the rotating member, each collecting roller of a group is arranged tangent to a respective transfer roller (by moving the rotation axes of two collecting rollers) and the oscillating frame is driven to move the four transfer rollers at the same speed as the rotating member. While travelling along the oscillating frame, the collecting rollers are maintained tangent to the respective transfer rollers and the pieces of electrode foils and of separator strips are transferred to the respective collecting rollers. When the winding of the collecting rollers is completed, the rotation axes of two collecting rollers are moved to arrange the four collecting rollers about the winding mandrel. At the same time, the oscillating frame is returned to the initial position performing a return travel. The winding mandrel then begins the winding of the electrode foils and of the separator strips by picking them up from the four collecting rollers arranged about it and when the oscillating frame returns to the initial position it is activated on a new collecting group.

With each rotation of the rotating member, a collecting group receives respective pieces of electrode foils and of separator strips and the corresponding winding mandrel receives these pieces of electrode foils and of separator strips from the collecting rollers and winds them together.

The Applicant has noted that there is an increasing need to reduce the manufacture complexity of the apparatuses for the manufacture of electrochemical cells, for example in order to be able to reduce the production costs of the electrochemical cells or to increase the operational reliability of the apparatuses for the manufacture of electrochemical cells.

The Applicant has noted that in a winding apparatus of the type summarily described above, the movement of the oscillating frame and with it of the transfer rollers is necessary to make available a transfer time necessary to transfer the pieces of electrode foils and of separator strips from the respective transfer rollers to the collecting rollers.

The Applicant has however noted that the movement of the oscillating frame and of the transfer rollers requires that the path of the electrode foils and of the separator strips fed continuously to the transfer rollers be changed continuously in accordance with the oscillating movement of the oscillating frame.

The Applicant has noted that in addition to the manufacture complexity associated with the oscillating frame, a manufacture complexity associated with the continuous change of the path of the electrode foils and of the separator strips is required. This manufacture complexity can be particularly expensive in relation to the path of the electrode foils which are much more delicate and much more subject to damage than the separator strips.

The Applicant has perceived that if it would be possible to maintain substantially unchanged the path followed by the electrode foils and by the separator strips, it would be possible to reduce the manufacture complexity of the apparatus.

The Applicant has found that by rotating each collecting device about a corresponding transfer device to perform the transfer of the electrode foils and of the separator strips from the transfer devices to the collecting devices, the transfer time would be given by the time taken for the collecting devices to rotate about the respective transfer devices.

The Applicant has verified that this allows to eliminate the need to use the oscillating frame to make this transfer time available, being able to arrange the transfer devices in a fixed or in any case substantially fixed position during the transfer of the electrode foils and of the separator strips from the transfer devices to the collecting devices. In this way, the path followed by the electrode foils and by the separator strips may remain unchanged or substantially unchanged during the transfer of the electrode foils and of the separator strips.

The present invention therefore concerns, in a first aspect thereof, a winding apparatus for winding one or more strip-like separators and electrode foils together.

Preferably, there is provided a loading station.

Preferably, there is provided a plurality of transfer devices placed in said loading station and along a loading path.

Preferably, each transfer device is rotatable about its own transfer axis and is configured to receive and transfer an electrode foil or a strip-like separator.

Preferably, there is provided a plurality of collecting devices, each of which designed to face a respective transfer device in the loading station to receive an electrode foil or a strip-like separator and each of which rotatable about its own winding axis.

Preferably, there is provided at least one winding mandrel for winding electrode foils and strip-like separators received from said plurality of collecting devices together.

Preferably, when a collecting device is facing a respective transfer device, the collecting device rotates about its own winding axis and said winding axis rotates about the transfer axis of the transfer device.

The present invention concerns, in a second aspect thereof, a method for winding one or more strip-like separators and electrode foils together.

Preferably, it is provided to feed strip-like elements each defining an electrode foil or strip-like separator to respective transfer devices rotatable about their own transfer axes.

Preferably, it is provided to transfer each strip-like element from the respective transfer device to a respective collecting device by rotating the collecting device about its own winding axis and by rotating said winding axis about the transfer axis of the transfer device.

Preferably, it is provided to simultaneously unwind the strip-like elements from each collecting device and wind them onto a winding mandrel.

The Applicant has verified that by rotating the collecting device about its own winding axis and by rotating said winding axis about the transfer axis of the transfer device, it is possible to transfer a strip-like element from a transfer device to the respective collecting device without necessarily having to move the transfer device along the loading path and parallel to the collecting device to keep it in contact with the respective collecting device.

"Strip-like element" means an electrode foil or a separator strip.

"Electrode foil" means a strip or foil having two dimensions much larger than a third dimension. The electrode foil can be a monolithic strip (or foil) or a strip formed by a plurality of layers joined together of identical material or different materials, possibly coated at least in part with an active material for electrodes. The electrode foil also has characteristics that allow some bending during its use.

"Separator strip" means a strip having a dimension much larger than two further dimensions, wherein a first dimension of such two further dimensions is much larger than a second dimension of such two further dimensions. The strip can be monolithic or formed by a plurality of layers joined together of identical material or different materials. The separator strip is made of or coated with dielectric material. The separator strip also has characteristics such as to allow some bending during its use.

"Active material for electrodes" means an anodic or cathodic material which may comprise, by way of example, in the case of anodic material, graphite or other carbonaceous materials or materials based on silicon and, in the case of cathodic material, materials based on lithium oxide, nickel, manganese, cobalt, aluminium or materials based on iron phosphate and lithium.

"Contact between a collecting device and a transfer device" means that the collecting device contacts the transfer device directly or by interposing a strip-like element between the collecting device and the transfer device.

"Collecting device facing a transfer device" means that the collecting device is placed at and preferably in contact with the transfer device.

The present invention may have at least one of the preferred features described below. Such features may be present individually or in combination with each other, unless expressly stated otherwise, both in the winding apparatus and in the method for winding of the present invention.

Preferably, the winding axis of each collecting device is parallel to the transfer axis of any transfer device.

Preferably, the transfer axes of all the transfer devices are parallel to each other.

Preferably, the winding axes of all the collecting devices are parallel to each other.

Preferably, the rotation direction of the collecting devices about the respective winding axis is equal to the rotation direction of the winding axis about the transfer axis of the transfer device.

Preferably, when a collecting device is facing a respective transfer device, said collecting device is in contact with the transfer device.

Preferably, when a collecting device is facing a respective transfer device, the winding axis of the collecting device rotates by an angle comprised between 30° and 270° about the transfer axis of the transfer device.

More preferably, said angle is comprised between 45° and 240°, even more preferably comprised between 50° and 210°, even more preferably comprised between 60° and 180°, even more preferably comprised between 65° and 160°, for example said angle is about 100°.

The time required for a collecting device to rotate about the transfer device, and in particular for the winding axis of the collecting device to rotate about the transfer axis of the transfer device, determines the winding time of a strip-like element on the collecting device.

To calibrate the winding speed of a strip-like element on a collecting device, and therefore, with the same winding time, allow the winding of strip-like elements of any length, when a collecting device is facing a respective transfer device, the transfer device preferably rotates about its own transfer axis.

Preferably, to increase the winding speed and thus allow windings of strip-like elements of considerable length (for example equal to or greater than 6 metres), the rotation direction of the transfer device about its own transfer axis is equal to the rotation direction of the winding axis about the transfer axis.

Preferably, there is provided a plurality of collecting groups each comprising a plurality of collecting devices. The number of collecting devices of each plurality of collecting devices is preferably equal to the number of transfer devices.

More preferably, there is provided at least a first collecting group comprising a support structure on which said plurality of collecting devices is arranged.

Preferably, each collecting device is rotatable about its own winding axis with respect to the support structure.

Preferably, to allow the collecting device to rotate about the transfer device, said support structure rotates about its own support axis when a collecting device is facing a respective transfer device.

Preferably, the winding axes of the collecting devices rotate about said support axis of the support structure at least when they are in said loading station.

Preferably, the winding axes of the collecting devices rotate about said support axis of the support structure dragged in rotation by the rotation of the support structure about its support axis.

Preferably, the rotation direction of the support structure about the support axis causes the rotation direction of the winding axis about the transfer axis.

Preferably, when a collecting device of a collecting group is facing a corresponding transfer device, the support structure rotates about its own support axis by an angle (expressed in sexagesimal degrees) given by the formula: 360/number of transfer devices, where number of transfer devices represents the total number of transfer devices present in the apparatus.

Preferably, when a collecting device of a collecting group is facing a corresponding transfer device, the support structure rotates about its own support axis by an angle comprised between 30° and 270°. This rotation coincides with the rotation of the winding axis about the support axis of the support structure.

More preferably, said angle is comprised between 45° and 240°, even more preferably comprised between 45° and 180°, even more preferably comprised between 50° and 120°, even more preferably comprised between 60° and 110°, for example said angle is about 90°.

Preferably, each collecting device comprises a winding pin traversed by the winding axis of the collecting device.

Preferably, each winding pin is connected to the support structure.

Preferably, each collecting device comprises a collecting roller rotatable about a respective winding pin.

Preferably, each winding pin is traversed by a respective winding axis and develops parallel to the respective winding axis.

Preferably, the support structure is configured to support each collecting device and to rotate it about the support axis of the support structure.

Preferably, the support axis of the support structure is parallel to the winding axes of the collecting devices.

Preferably, the winding axes of the collecting devices are arranged about the support axis of the support structure.

Preferably, the winding axes of the collecting devices are arranged along a circumference surrounding the support axis of the support structure.

Preferably, the winding axes of the collecting devices are arranged along a circumference having a centre traversed by the support axis of the support structure.

Preferably, the winding axes are arranged angularly spaced about the support axis of the support structure.

Preferably, the winding axes are angularly spaced from each other by angular distances that are maintained unchanged at least when the support structure is in the loading station.

Preferably, the rotation of the support structure about the support axis takes place, at least in the loading station, without varying the angular distances between the winding axes.

Preferably, each transfer device comprises at least one transfer roller rotatable about a transfer pin. The transfer pin is parallel to the winding axes.

Preferably, each transfer device is configured to retain and drag at least a portion of the strip-like element and to deliver the portion of the strip-like element to a respective collecting device.

To that end, at least a portion of each transfer device may comprise a suction device activatable on a portion of strip-like element.

Preferably, at each transfer device there is provided a cutting device for cutting the strip-like element arriving at the transfer device and making a piece of strip-like element that will be transferred to the collecting device.

Preferably, each collecting device comprises a retention device for retaining at least a portion of strip-like element transferred by the transfer device and allowing the strip-like element to be wound onto the collecting device.

Preferably, the loading station comprises an adhesive strip feeder.

Preferably, the adhesive strip feeder comprises an adhesive strip reel and a knife.

To allow the support structure to travel along the loading path, said support structure is preferably rotatable about a transport axis.

Preferably, said support structure rotates about its own support axis and about said transport axis at least when the collecting group travels along the loading path.

In this way, in the loading station each collecting device facing a corresponding transfer device rotates simultaneously about its own winding axis, about the support axis of the support structure, about the transport axis and about the transfer axis.

The transport axis is preferably parallel to the support axis of the support structure.

The rotation of the support structure about the transport axis defines a substantially circular path for the support structure. A portion of such substantially circular path defines the loading path.

Preferably, the loading path is a path that develops along an arc of circumference.

Preferably, the transport axis is parallel and traversed by a motorized transport shaft.

Preferably, the support structure is connected to said motorized transport shaft in order to be able to travel along the loading path.

Preferably, the transfer devices are arranged along the arc of circumference defining the loading path.

Preferably, the support axis of the support structure is maintained at a constant distance from the transport axis when the support structure (and with it the collecting devices) follow the loading path.

To allow the support axis of the support structure to be maintained at a constant distance from the transport axis and, at the same time, allow the collecting device to rotate about the respective transfer device, preferably the transfer axis of each transfer device is translatable transversely to the loading path. This translation preferably takes place during the rotation of the winding axis of a collecting device about the transfer axis of the transfer device. Preferably, such translation is the only movement made by the transfer axis of each transfer device.

Preferably, the transfer axis of each transfer device translates away from the transport axis of the support structure during rotation of the winding axis of a collecting device about the transfer axis of the transfer device.

Preferably, during the translation of the transfer axis away from the transport axis, the collecting device is maintained in contact with the transfer device.

Preferably, the transfer devices do not make movements in the direction of the loading path.

Preferably, a portion of adhesive strip is fed to a collecting device and partially superimposed on an end portion of the strip-like element that will be transferred to said collecting device.

Preferably, said portion of adhesive strip is fed to a single collecting device.

Preferably, said strip-like element is a separator strip.

Preferably, there is provided at least one winding mandrel for winding electrode foils and strip-like separators received from said plurality of collecting devices together.

Preferably, each collecting group comprises a winding mandrel.

The winding mandrel has the function of winding the strip-like elements wound on the collecting devices of the same collecting group together and making a jelly roll type winding.

Preferably, said collecting devices are arranged about said winding mandrel at least when the collecting group travels along the loading path.

The winding mandrel is rotatable about a forming axis parallel to the winding axes of the collecting devices and traversed by the support axis of the support structure.

This forming axis preferably coincides with the support axis of the support structure.

Preferably, there is provided an unwinding path travelled by said first collecting group after travelling along the loading path.

Preferably, the unwinding path is successive to the loading path.

Preferably, the unwinding path is a path that develops along an arc of circumference.

A portion of the substantially circular path caused by the rotation of the support structure about the transport axis defines the unwinding path.

While travelling along the unwinding path, the strip-like elements are transferred from the collecting devices to the winding mandrel and are wound about the winding mandrel.

Preferably, the collecting devices are arranged and configured to transfer electrode foils and strip-like separators to said winding mandrel while travelling along the unwinding path.

The winding mandrel may comprise two half-parts that can be moved towards and away from each other to allow free ends of the strip-like elements to be retained during jelly roll winding of the strip-like elements.

Preferably, there is provided an extraction path travelled by said first collecting group after having travelled long the unwinding path.

While travelling along the extraction path, the strip-like elements wound about the winding mandrel are extracted by the winding mandrel and transferred to subsequent processing stations.

Preferably, each collecting group comprises four collecting devices.

In this embodiment, four transfer devices are preferably provided.

Preferably, there is provided a transfer device for a first electrode foil, a transfer device for a second electrode foil and two transfer devices for two separator strips.

Preferably, the act of transferring a strip-like element from the respective transferring device to a respective collecting device comprises bringing a collecting device closer to the respective transferring device.

Subsequently, it is preferably provided to retain on the collecting device a free flap of the strip-like element carried by the transfer device.

These actions are preferably carried out by rotating the collecting device about its own winding axis and, preferably, by rotating the internal transfer device to its own transfer axis.

Subsequently, the action of rotating the winding axis of the collecting device about the transfer axis of the transfer device is preferably performed.

This action is preferably carried out by rotating the transfer device about its own transfer axis.

During this action, the strip-like element is transferred from the transfer device to the collecting device, winding about the collecting device.

Preferably, during the transfer of the strip-like element from the transfer device to the collecting device the transfer axis of the transfer device translates away from the transport axis.

This action is performed to maintain contact between the collecting device and the transfer device.

Preferably, before the complete transfer of the strip-like element onto the collecting device, the transfer axis of the transfer device translates closer to the transport axis to continue maintaining the contact between the collecting device and the transfer device.

Preferably, during the rotation of the winding axis about the transfer axis of the transfer device the winding axis of the collecting device rotates about the support axis of the support structure.

Preferably, when the transfer of the strip-like element onto the collecting device is completed, the collecting device moves away from the transfer device.

This action is preferably carried out by rotating the support structure about the transport axis and along the loading path.

Preferably, it is provided to rotate the support axis of the support structure about the transport axis to make said support axis travel along the loading path along which said transfer devices follow each another.

Preferably, the rotation of all the support structures about the transport axis is performed continuously, i.e. with a continuous rotation without interruptions.

The transfer of a strip-like element from each transfer device to a corresponding collecting device is preferably performed while the support structures are rotating about the transport axis.

Further characteristics and advantages of the present invention will become clearer from the following detailed description of a preferred embodiment thereof, with reference to the appended drawings and provided by way of indicative and non-limiting example, wherein:
- figure 1 is a schematic view of a winding apparatus for winding one or more strip-like separators and electrode foils together in accordance with the present invention:
- figure 2 is a schematic view of the apparatus of figure 1 with some parts removed to better highlight others;
- figure 2A is a schematic view of a component of the apparatus of figure 1; and
- figures 3 to 10 are schematic views of the apparatus of figure 1 in different operating phases.

The representations in the accompanying figures do not necessarily have to be understood in scale and do not necessarily respect the proportions between the various parts.

The apparatus 1 is preferably used for winding one or more strip-like separators and electrode foils together which are used to make electrochemical cells, for example secondary electrochemical cells.

The apparatus 1 comprises a plurality of feeders 2 for feeding strip-like elements 100 each of which is intended to form an anode 101, a cathode 102 or a strip-like separator 103 of dielectric material. The strip-like elements 100 are fed by the plurality of feeders 2 in the form of continuous strips.

The feeders 2 are connected to reels (not illustrated) on each of which a respective strip-like element 100 is wound.

Each feeder 2 comprises a return roller 3 and an unwinding roller 4. The return roller 3 has the function of accompanying the strip-like element 100 towards the unwinding roller 4 making the strip-like element perform a scallop path. Each return roller 3 can be movable to increase or decrease the length of this scallop, so as to create a buffer for the strip-like element fed to the unwinding roller 4.

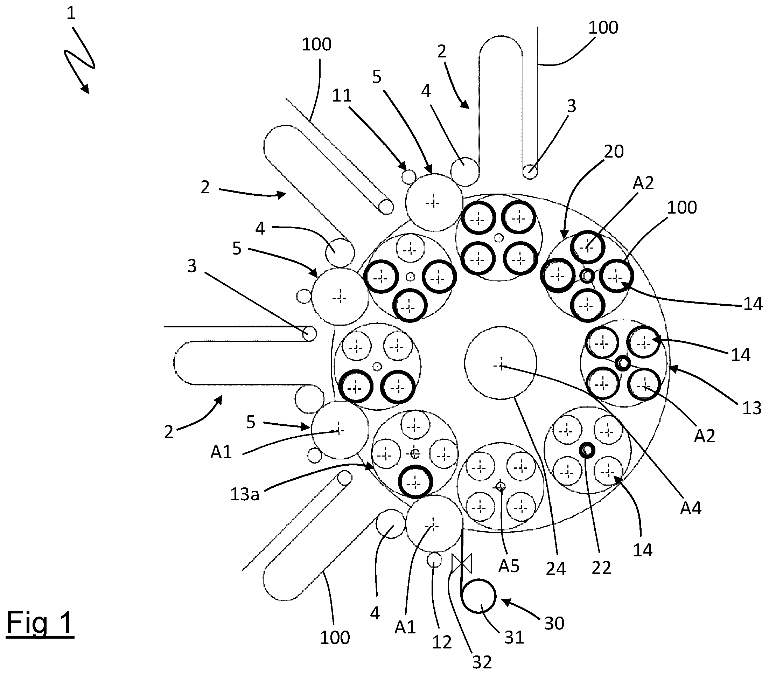

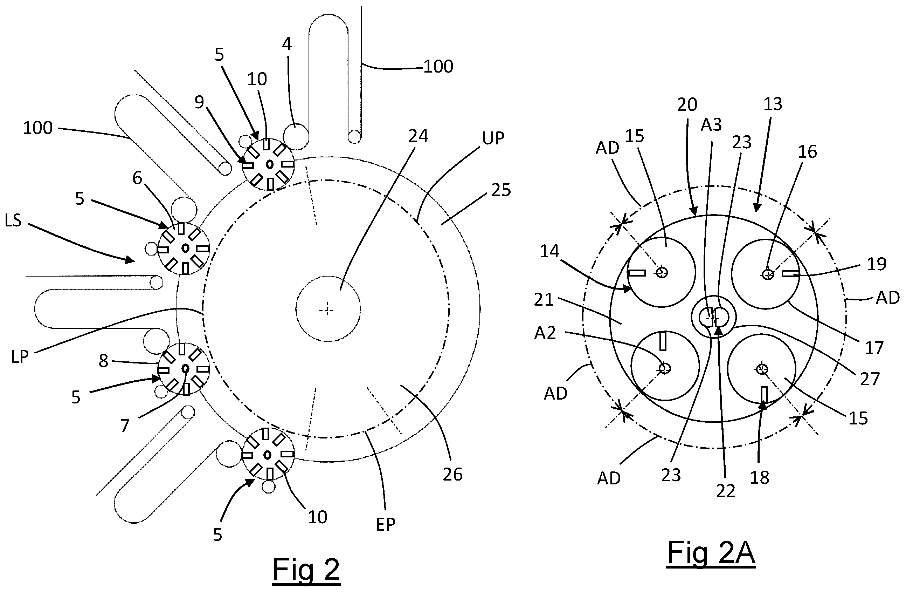

The apparatus 1 comprises a plurality of transfer devices 5. Each transfer device 5 is fed with a strip-like element 100 by the respective feeder 2. As schematized in figures 1 and 2, the unwinding roller 4 of each feeder 2 feeds a respective strip-like element 100 to a corresponding transfer device 5. Each transfer device 5 is rotatable about its own transfer axis A1. The transfer axes A1 of all the transfer devices 5 are parallel to each other.

Each transfer device 5 comprises a transfer roller 6 rotatable about a transfer pin 7 coincident with the transfer axis A1. The transfer roller 6 comprises an outer surface 8 on which the strip-like element 100 is fed by the unwinding roller 4.

As schematically illustrated in figure 2, each transfer device 5 comprises a suction device 9 activatable on a portion of strip-like element 100 to retain it. The suction device 9 can for example be realized by a plurality of aspirators 10 distributed on the outer surface 8 of the transfer roller 6. The suction device 9 has the task of retaining the strip-like element 100 during the rotation of the transfer device 5.

At each transfer device 5, the apparatus 1 comprises a cutting device 11 for cutting the strip-like element that is transferred by the transfer device 5. The cutting device 11 can be a cutter or a rotating blade 12 (as schematized in figure 2) configured to cut a strip-like element 100 and make a piece thereof. In the embodiment illustrated in figure 2, the cutting device 11 is active on the transfer device 5, and in particular on the transfer roller 6 and is placed downstream of the unwinding roller 4. In other embodiments not illustrated, the cutting device 11 can be placed upstream of the unwinding roller 4 to feed the transfer device 5 directly with pieces of strip-like elements 100.

At a transfer device 5 there is placed an adhesive strip feeder 30 (illustrated in figure 1). The adhesive strip feeder 30 comprises a adhesive strip reel 31 and a knife 32.

As illustrated in figure 2, the transfer devices 5 are arranged in succession one after the other in a loading station LS and along a loading path LP.

Each transfer device 5 is translatable perpendicularly to the loading path LP.

Each transfer device 5 is not movable in any other direction.

The apparatus 1 further comprises a plurality of collecting groups 13, between which a first collecting group 13a illustrated in figure 2A. The collecting groups 13 are identical to each other and, therefore, what is described below in relation to the first collecting group 13a is valid for any collecting group 13.

The first collecting group 13a comprises a plurality of collecting devices 14. The number of collecting devices 14 is equal to the number of transfer devices 5. Each collecting device 14 is rotatable about its own winding axis A2. The winding axes of all the collecting devices 14 are parallel to each other. Each collecting device comprises a collecting roller 15 rotary about a winding pin 16 coincident with the winding axis A2. The collecting roller 16 comprises an outer surface 17 configured to receive thereon a piece of strip-like element 100.

As schematically illustrated in figure 2A, each collecting device 14 comprises a retention device 18 activatable on a portion of strip-like element 100 to retain it. The retention device 18 can for example be realized by one or more aspirators 19 (in figure 2A only one aspirator 19 is shown) placed on the outer surface 17 of the collecting roller 15. The suction device 9 has the task of retaining the strip-like element 100 during the rotation of the transfer device 5.

The first collecting group 13a further comprises a support structure 20 for the collecting devices 14. The support structure 20 can be a plate or a disc 21 (as illustrated in the attached figures) or a frame of any shape. The collecting devices 14 are rotatingly constrained to the support structure 20 at the winding axes A2. In the preferred embodiment of the invention, the winding axes A2 are motorized to be able to rotate with respect to the support structure 20. For this purpose, it can be provided for an electric motor (not illustrated) for each collecting device 14 or a single electric motor that drives in rotation all the collecting devices 14 with respect to the support structure 14. The collecting rollers 15 are hinged to the support structure 14 at the respective winding pins 16. As schematically illustrated in figure 2A, the winding axes A2 are angularly spaced from each other by respective angular distances AD which are always maintained constant. These angular distances AD are identical to each other.

The first collecting group 13a comprises a winding mandrel 22 rotatingly mounted with respect to the support structure 20 about a forming axis A3. In the preferred embodiment of the invention, the winding mandrel 22 is rotatingly mounted on the support structure 20 about the forming axis A3. The rotation of the winding mandrel 22 about the forming axis A3 is actuated by an electric motor (not illustrated). The forming axis A3 is parallel to the winding axes A2. The winding mandrel 22 comprises two half-parts 23 that can be moved towards and away from each other to allow the free end of a strip-like element 100 to be inserted between the two half-parts 23 (by moving the two half-parts 23 away) and retained between them (by bringing the two half-parts 23 closer).

Each support structure 20 is rotatingly mounted about a transport axis A4. For this purpose, the apparatus 1 comprises a motorized transport shaft 24 traversed by the transport axis A4. The support structures 20 are rotationally constrained to the transport shaft 24 and spaced from the transport axis A4. The support structures 20 are constrained to the transport shaft 24 by a transport structure 25 which may have any structure suitable for the purpose. In the embodiment illustrated in the accompanying figures (see for example figure 2), the support structures 20 are constrained to the transport shaft 24 by a disc-shaped plate 26 on which the transport shaft 24 is keyed. The transport axis A4 is parallel to the winding axes A2 of the collecting devices.

The support structures 20 are also rotatingly constrained to the support structure 25 so as to be able to rotate about an own support axis A5 during rotation about the transport axis A4. Each support structure 20 comprises a support pin 27 that is hinged to the transport structure 25 and motorized. The support axis A5 passes through the support pin 27. The support axis A5 is parallel to the winding axes A2. The support axis A5 coincides with the forming axis A3 of the winding mandrel 22.

Each collecting device 14 is therefore rotatable about its own winding axis A2, about the support axis A5 of the respective support structure 20 and about the transport axis A4.

The support structures 20 rotate continuously about the transport axis A4 following a substantially circular path. At the transfer devices 5, the transport structures 20 follow the loading path LP. While travelling along the loading path LP, the support structures 20 rotate continuously about the support axis A5. While travelling along the loading path LP, the collecting devices 14 rotate about the respective winding axes A2. The transfer devices 5 rotate about the transfer axes A1.

Along the loading path LP, the strip-like elements 100 are transferred, cut into pieces, to the collecting devices 14 of a collecting group 13. Each transfer device 5 transfers a piece of strip-like element 100 to a single collecting device 14 of a collecting group 13. The transfer of the strip-like elements 100 onto the respective collecting devices 14 of the same collecting group 13 takes place at different and successive times while travelling along the loading path LP. In other words, the transfer of the strip-like elements 100 onto the respective collecting devices 14 of a same collecting group 13 does not take place simultaneously. The transfer of a piece of strip-like element 100 from a transfer device 5 to a collecting device 14 takes place by effect of the rotation of the collecting device 14 about its own winding axis A2 and, at the same time, about the transfer axis A1 of the transfer device 5.

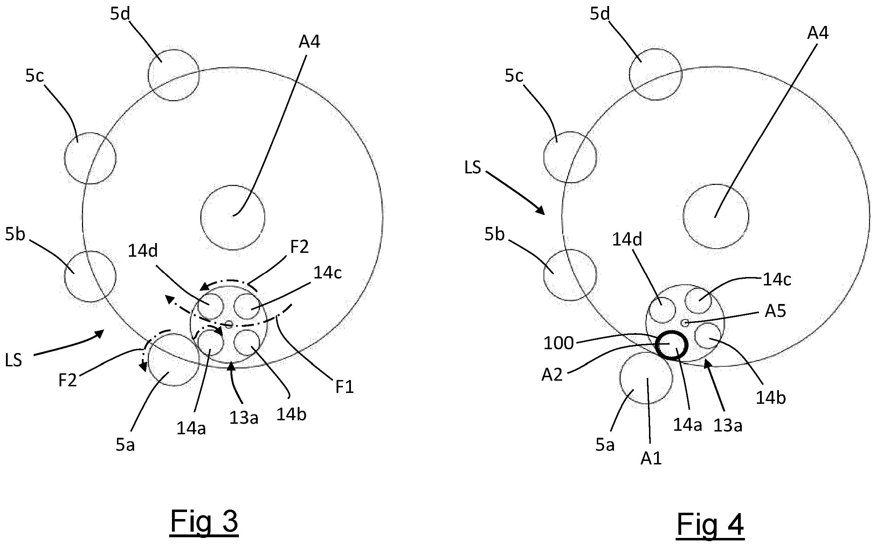

Referring to figures 3 to 10, a method of winding strip-like elements on the collecting devices of the first collecting group 13a is described. What is described applies identically to any collecting group 13.

In the illustrated example, there are provided four collecting devices 14 and four transfer devices 5. The four collecting devices 14 are, respectively, a first collecting device 14a, a second collecting device 14b, a third collecting device 14c and a fourth collecting device 14d. The four transfer devices 5 are, respectively, a first transfer device 5a, a second transfer device 5b, a third transfer device 5c and a fourth transfer device 5d.

During the rotation of the first collecting group 13a about the transport axis A4, the first collecting group 13a reaches the loading station LS (figure 3). The rotation of the first collecting group 13a about the transport axis A4 takes place in a first angular direction F1 (clockwise looking at figure 3). The support structure 20 is in rotation about the support axis A5. This rotation takes place in a second angular direction F2 (counterclockwise looking at figure 3) opposite to the first angular direction F1. The first collecting device 14a is in rotation about its own winding axis A2 in the first angular direction F1. As soon as the first collecting device 14a is facing the first transfer device 5a, coming into contact with it (figure 3), the transfer of a first piece of strip-like element 100 to the first collecting device 14 begins. The first transfer device 5a is fed with the strip-like element 100 and rotates about its own transfer axis A1 in the second angular direction F2. This rotation brings a free end of the strip-like element 100 into contact with the first collecting device 14a. The retention device 18 of the first collecting device 14a retains the free end of the strip-like element 100. Simultaneously or in advance, a portion of adhesive strip that is fed to the first collecting device 14a and partially superimposed on the free end of the strip-like element 100 is cut from the adhesive strip reel 31 by the knife 32. The rotation of the first collecting device 14a and of the first transfer device 5a actuates a winding of the strip-like element 100 on the first collecting device 14a. This strip-like element 100 is a separator strip.

The rotation about the transport axis A4 of the first collecting group 13a leads the first collecting group to travel along the loading path LP. The first collecting device 14a continues to remain in contact with the first transfer device 5a (figure 4). The first collecting device 14a continues to rotate about its own winding axis A2. The support structure 20 continues to rotate about its own support axis A5. The first transfer device 5a continues to rotate about its own transfer axis A1. The rotation of the support structure 20 about the support axis A5 and about the transport axis A4 has the effect that the first collecting device 14a (and in particular its own winding axis A2) rotates about the transfer axis A1 of the first transfer device 5a. To avoid a mechanical interference between the first collecting device 14a and the first transfer device 5a, the first transfer device 5a translates away from the transport axis A4 (as illustrated in figure 4). This translation is such as not to remove the contact between the first collecting device 14a and the first transfer device 5a.

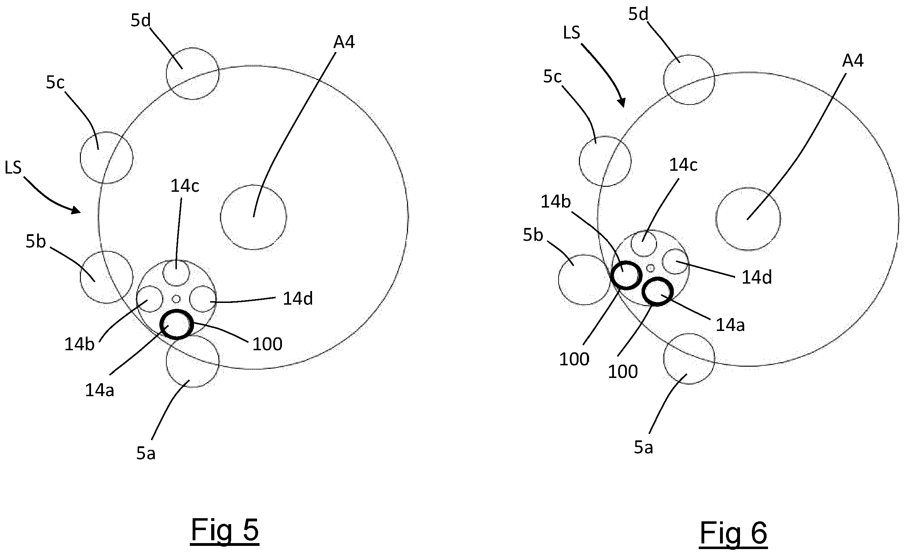

The further rotation about the transport axis A4 of the first collecting group 13a leads the first collecting group to further travel along the loading path LP. The first collecting device 14a continues to remain in contact with the first transfer device 5a (figure 5). The first collecting device 14a continues to rotate about its own winding axis A2. The support structure 20 continues to rotate about its own support axis A5. The first transfer device 5a continues to rotate about its own transfer axis A1. The rotation of the support structure 20 about the support axis A5 and about the transport axis A4 has the effect that the first collecting device 14a (and in particular its own winding axis A2) continues to rotate about the transfer axis A1 of the first transfer device 5a. To continue to maintain contact between the first collecting device 14a and the first transfer device 5a, the first transfer device 5a translates closer to the transport axis A4 (as illustrated in figure 5). This translation is such as to return the first transfer device 5a to the initial position. After, before or simultaneously with the return of the first transfer device 5a to the initial position, the cutting device 11 longitudinally cuts the strip-like element 100 making a piece of strip-like element 100.

When the end portion of the piece of strip-like element 100 has been wound on the first collecting device 14a, the winding of the piece of strip-like element 100 on the first collecting device 14a is completed. At this instant, the first collecting device 14a is still in contact with the first transfer device 5a (figure 5). At a next instant, the rotation of the support structure 20 about the support axis A5 and about the transport axis A4 interrupts the contact between the first collecting device 14a and the first transfer device 5a. Upon complete winding of the piece of strip-like element 100 on the first collecting device 14a, the winding axis A2 of the first collecting device 14a has made a rotation by an angle comprised between 80° and 120° about the transfer axis A1 of the first transfer device 5a.

A further rotation of the support structure 20 about the support axis A5 and about the transport axis A4 brings the second collecting device 14b into contact with the second transfer device 5b.

What is described in relation to the first collecting device 14a and the first transfer device 5a applies identically to the second collecting device 14b and to the second transfer device 5b. Figure 6 schematically illustrates the instant at which the second transfer device 5b is translated away from the transport axis A4 with the second collecting device 14b in contact with the second transfer device 5b. Note that during the winding of a piece of strip-like element 100 on the second collecting device 14b, a piece of strip-like element 100 has already been wound on the first collecting device 14a. The strip-like element 100 transferred to the second collecting device 14b is an electrode foil.

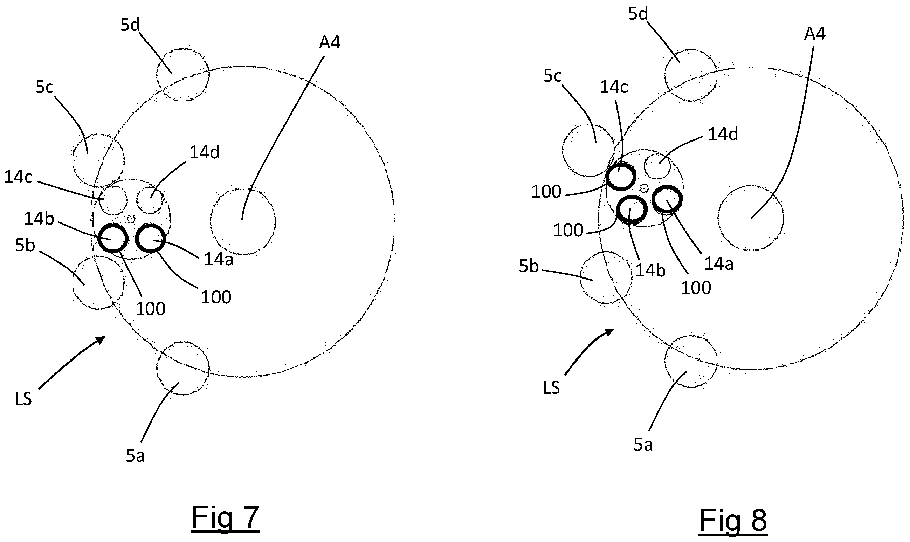

What is described in relation to the first collecting device 14a and the first transfer device 5a also applies identically to the third collecting device 14c and to the third transfer device 5c. Figure 7 schematically illustrates the instant at which the third transfer device 5c comes into contact with the third collecting device 14c. Figure 8 schematically illustrates the instant at which the third transfer device 5c is translated away from the transport axis A4 with the third collecting device 14c in contact with the third transfer device 5c. Note that during the winding of a piece of strip-like element 100 on the third collecting device 14c, on the first collecting device 14a and on the second collecting device 14b a piece of strip-like element 100 has already been wound. The strip-like element 100 transferred to the third accumulating device 14c is a separator strip.

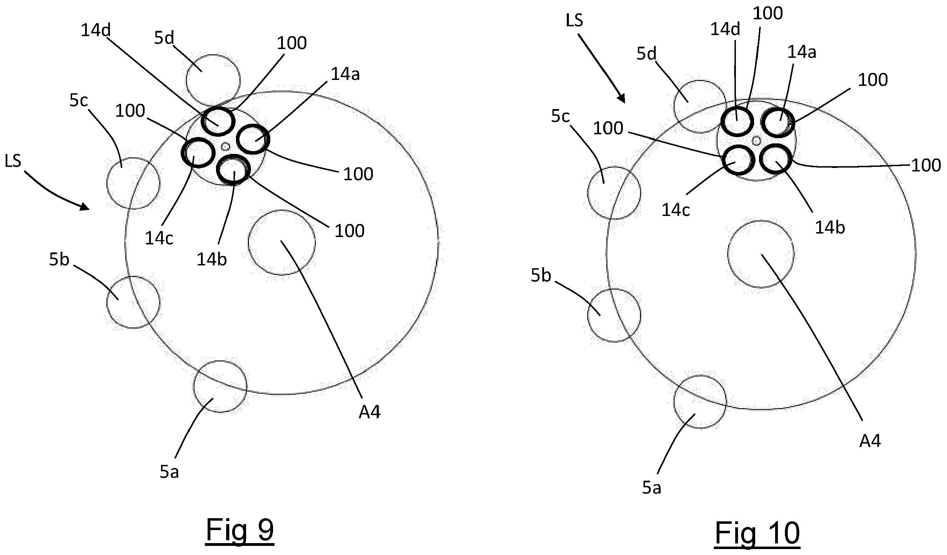

Yet, what is described in relation to the first collecting device 14a and to the first transfer device 5a applies identically also to the fourth collecting device 14d and to the fourth transfer device 5d. Figure 9 schematically illustrates the instant at which the fourth transfer device 5d is translated away from the transport axis A4 with the fourth collecting device 14d in contact with the fourth transfer device 5d. Figure 10 schematically illustrates the instant at which a piece of strip-like element 100 has been completely wound on the fourth collecting device 14d. Note that during the winding of a piece of strip-like element 100 on the fourth collecting device 14d, on the first collecting device 14a, on the second collecting device 14b and on the third collecting device 14c, a piece of strip-like element 100 has already been wound. The strip-like element 100 transferred to the fourth collecting device 14d is an electrode foil.

Between the start of the winding of a strip-like element 100 on the first collecting device 14a of the first collecting group 13a and the completion of the winding of a strip-like element 100 on the last collecting device 14d of the first collecting group 13a, the relative support structure 20 makes a 360° rotation about the support axis A5. Between the start of the winding of a strip-like element 100 on a first collecting device 14a of any collecting group 13 and the completion of the winding of a strip-like element 100 on the last collecting device 14d of the same collecting group 13, the relative support structure 20 makes a 360° rotation about the support axis A5. While travelling along the loading path LP, each support structure 20 makes a 360° rotation about the support axis A5.

When the winding of a strip-like element 100 on the last collecting device 14d of the first collecting group 13a has been completed, the rotation of the support structure 20 about the transport axis A4 leads the first collecting group 13a to travel along an unwinding path UP (illustrated in figure 2) that follows the loading path LP.

While travelling along the unwinding path UP, the pieces of strip-like element 100 wound on the collecting devices 14 are unwound by the latter and wound about the winding mandrel 22. During this operation the support structure 20 rotates about the transport axis A4. Furthermore, during this operation the collecting devices 14 rotate about their own winding axes A2 and the winding mandrel 22 rotates about the forming axis A3.

After the winding of the strip-like elements 100 on the winding mandrel 22 is completed, the portion of adhesive strip not superimposed on the free end of the strip-like element 100 carried by the first collecting device 14a is fixed to retain the strip-like elements 100 wound therebetween.

Once the winding of the strip-like elements 100 on the winding mandrel 22 is completed, the rotation of the support structure 20 about the transport axis A4 leads the first collecting group 13a to travel along an extraction path EP (illustrated in figure 2) that follows the unwinding path UP. While travelling along the extraction path EP, the strip-like elements 100 wound about the winding mandrel 22 are extracted by the winding mandrel 22 and transferred to subsequent processing stations.

Once the extraction of the strip-like elements 100 wound on each other by the winding mandrel 22 is completed, the rotation of the support structure 20 about the transport axis A4 leads the first collecting group 13a again to travel along the loading path LP and to start again the described cycle.

What is described above applies identically to any collecting group 13.

In the loading station LS there is simultaneously a number of collecting groups 14 equal to the number of transfer devices 5 (as shown in figure 1). Each transfer device 5 operates on a collecting device 14 of a respective collecting group 13 in the manner described above. Therefore, all the transfer devices 5 operate simultaneously on collecting devices 14 each of which collecting devices 14 belongs to a different collecting group 13.

## Claims

1. Winding apparatus (1) for winding one or more strip-like separators and electrode foils together comprising:
a loading station (LS);
a plurality of transfer devices (5) placed in said loading station (LS) and along a loading path (LP), wherein each transfer device (5) is rotatable about its own transfer axis (A1) and is configured to receive and transfer an electrode foil or strip-like separator;
a plurality of collecting devices (14), each of which designed to face a respective transfer device (5) in the loading station (LS) to receive an electrode foil or strip-like separator, each collecting device (14) being rotatable about its own winding axis (A2);
at least one winding mandrel (22) for winding electrode foils and strip-like separators received from said plurality of collecting devices (14) together;
wherein when a collecting device (14) is facing a respective transfer device (5), the collecting device (14) rotates about its own winding axis (A2) and said winding axis (A2) rotates about the transfer axis (A1) of the transfer device (5).

2. Winding apparatus (1) according to claim 1, wherein when a collecting device (14) is facing a respective transfer device (5), the winding axis (A2) of the collecting device (14) rotates by an angle comprised between 30° and 270° about the transfer axis (A1) of the transfer device (5).

3. Winding apparatus (1) according to claim 1 or 2, wherein when a collecting device (14) is facing a respective transfer device (5), the transfer device (5) rotates about its own transfer axis (A1).

4. Winding apparatus (1) according to any one of the preceding claims, comprising at least a first collecting group (13a) comprising a support structure (20) on which said plurality of collecting devices (14) is arranged; each collecting device (14) being rotatable about its own winding axis (A2) with respect to the support structure (20).

5. Winding apparatus (1) according to claim 4, wherein said support structure (20) rotates about its own support axis (A5) when a collecting device (14) is facing a respective transfer device (5).

6. Winding apparatus (1) according to claim 4 or 5, wherein said support structure (20) is rotatable about a transport axis (A4) to travel along said loading path (LP) in the loading station (LS); said support axis (A5) of the support structure (20) rotating about said transport axis (A4).

7. Winding apparatus (1) according to any one of the preceding claims, wherein the transfer axis (A1) of each transfer device (5) is translatable transversely to the loading path (LP) during rotation of the winding axis (A2) of a collecting device (14) about the transfer axis (A1) of the transfer device (5).

8. Winding apparatus (1) according to claim 6, wherein the transfer axis (A1) of each transfer device (5) translates away from the transport axis (A4) of the support structure (20) of the collecting device (14) during rotation of the winding axis (A2) of a collecting device (14) about the transfer axis (A1) of the transfer device (5).

9. Winding apparatus (1) according to claim 4, comprising an unwinding path (UP) travelled by said first collecting group (13a) after travelling along the loading path (LP); the collecting devices (14) transferring to a winding mandrel (22) electrode foils and strip-like separators while travelling along the unwinding path (UP).

10. Method for winding one or more strip-like separators and electrode foils together comprising:
feeding strip-like elements (100) each defining an electrode foil or strip-like separator to respective transfer devices (5) rotatable about their own transfer axes (A1);
transferring each strip-like element (100) from the respective transfer device (5) to a respective collecting device (14) by rotating the collecting device (14) about its own winding axis (A2) and by rotating said winding axis (A2) about the transfer axis (A1) of the transfer device (5);
simultaneously unwinding the strip-like elements (100) from each collecting device (14) and winding them onto a winding mandrel (22).

11. Method according to claim 10, wherein rotating said winding axis (A2) about the transfer axis (A1) of the transfer device (5) comprises rotating the winding axis (A2) of the collecting device (14) by an angle comprised between 30° and 270° about the transfer axis (A1) of the transfer device (5).

12. Method according to claim 10 or 11, wherein transferring each strip-like element (100) from the respective transfer device (5) to a respective collecting device (14) further comprises rotating the transfer device (5) about its own transfer axis (A1).

13. Method according to any one of claims 10 to 12, wherein rotating said winding axis (A2) about the transfer axis (A1) of the transfer device (5) further comprises rotating the winding axis (A2) of the collecting device (14) about a support axis (A5) for the collecting device (14) parallel to and distanced from the winding axis (A2).

14. Method according to claim 13, further comprising rotating said support axis (A5) about a transport axis (A4) in order to cause said support axis (A5) to travel along a loading path (LP) along which said transfer devices (5) follow each other.

15. Method according to claim 13, wherein transferring each strip-like element (100) from the respective transfer device (5) to a respective collecting device (14) comprises translating the transfer axis (A1) of the transfer device (5) away from said transport axis (A4) during the rotation of the winding axis (A2) about the transfer axis (A1).

## Patentansprüche

1. Wickelvorrichtung (1) zum gemeinsamen Aufwickeln eines oder mehrerer streifenförmiger Separatoren und Elektrodenfolien, umfassend:
eine Ladestation (LS);
eine Vielzahl von Übertragungsvorrichtungen (5), die in der Ladestation (LS) und entlang eines Ladewegs (LP) platziert sind, wobei jede Übertragungsvorrichtung (5) um ihre eigene Übertragungsachse (A1) drehbar ist und so konfiguriert ist, dass sie eine Elektrodenfolie oder einen streifenförmigen Separator aufnehmen und übertragen kann;
eine Vielzahl von Aufnahmevorrichtungen (14), von denen jede so ausgelegt ist, dass sie einer jeweiligen Übertragungsvorrichtung (5) in der Ladestation (LS) gegenüberliegt, um eine Elektrodenfolie oder einen streifenförmigen Separator aufzunehmen, wobei jede Aufnahmevorrichtung (14) um ihre eigene Wickelachse (A2) drehbar ist;
mindestens einen Wickeldorn (22) zum gemeinsamen Aufwickeln von Elektrodenfolien und streifenförmigen Separatoren, die von der Vielzahl von Aufnahmevorrichtungen (14) aufgenommen werden;
wobei, wenn eine Aufnahmevorrichtung (14) einer entsprechenden Übertragungsvorrichtung (5) gegenüberliegt, sich die Aufnahmevorrichtung (14) um ihre eigene Wickelachse (A2) dreht und sich die Wickelachse (A2) um die Übertragungsachse (A1) der Übertragungsvorrichtung (5) dreht.

2. Wickelvorrichtung (1) nach Anspruch 1, wobei, wenn eine Aufnahmevorrichtung (14) einer jeweiligen Übertragungsvorrichtung (5) gegenüberliegt, die Wickelachse (A2) der Aufnahmevorrichtung (14) um einen Winkel zwischen 30° und 270° um die Übertragungsachse (A1) der Übertragungsvorrichtung (5) dreht.

3. Wickelvorrichtung (1) nach Anspruch 1 oder 2, wobei, wenn eine Aufnahmevorrichtung (14) einer jeweiligen Übertragungsvorrichtung (5) gegenüberliegt, die Übertragungsvorrichtung (5) um ihre eigene Übertragungsachse (A1) dreht.

4. Wickelvorrichtung (1) nach einem der vorstehenden Ansprüche, umfassend mindestens eine erste Aufnahmegruppe (13a) mit einer Stützstruktur (20), auf der die Vielzahl der Aufnahmevorrichtungen (14) angeordnet ist, wobei jede Aufnahmevorrichtung (14) um ihre eigene Wickelachse (A2) relativ zur Stützstruktur (20) drehbar ist.

5. Wickelvorrichtung (1) nach Anspruch 4, wobei sich die Stützstruktur (20) um ihre eigene Stützachse (A5) dreht, wenn eine Aufnahmevorrichtung (14) einer entsprechenden Übertragungsvorrichtung (5) gegenüberliegt.

6. Wickelvorrichtung (1) nach Anspruch 4 oder 5, wobei die Stützstruktur (20) um eine Transportachse (A4) drehbar ist, um sich entlang des Ladewegs (LP) in der Ladestation (LS) zu bewegen; wobei sich die Stützachse (A5) der Stützstruktur (20) um die Transportachse (A4) dreht.

7. Wickelvorrichtung (1) nach einem der vorstehenden Ansprüche, wobei die Übertragungsachse (A1) jeder Übertragungsvorrichtung (5) während der Drehung der Wickelachse (A2) einer Aufnahmevorrichtung (14) um die Übertragungsachse (A1) der Übertragungsvorrichtung (5) quer zum Ladeweg (LP) verschiebbar ist.

8. Wickelvorrichtung (1) nach Anspruch 6, wobei sich die Übertragungsachse (A1) jeder Übertragungsvorrichtung (5) während der Drehung der Wickelachse (A2) einer Aufnahmevorrichtung (14) um die Übertragungsachse (A1) der Übertragungsvorrichtung (5) von der Transportachse (A4) der Stützstruktur (20) der Aufnahmevorrichtung (14) weg verschiebt.

9. Wickelanlage (1) nach Anspruch 4, die einen Abwickelweg (UP) umfasst, den die erste Aufnahmegruppe (13a) nach dem Zurücklegen des Ladewegs (LP) zurücklegt; wobei die Aufnahmevorrichtungen (14) Elektrodenfolien und streifenförmige Separatoren während des Zurücklegens des Abwickelwegs (UP) auf einen Wickeldorn (22) übertragen.

10. Verfahren zum gemeinsamen Aufwickeln eines oder mehrerer streifenförmiger Separatoren und Elektrodenfolien, umfassend:
Zuführen von streifenförmigen Elementen (100), die jeweils eine Elektrodenfolie oder
einen streifenförmigen Separator definieren, zu entsprechenden Übertragungsvorrichtungen (5), die um ihre eigenen Übertragungsachsen (A1) drehbar sind;
Übertragen jedes streifenförmigen Elements (100) von der jeweiligen Übertragungsvorrichtung (5) zu einer jeweiligen Aufnahmevorrichtung (14) durch eine Drehung der Aufnahmevorrichtung (14) um ihre eigene Wickelachse (A2) und durch eine Drehung der Wickelachse (A2) um die Übertragungsachse (A1) der Übertragungsvorrichtung (5);
gleichzeitiges Abwickeln der streifenförmigen Elemente (100) von jeder Aufnahmevorrichtung (14) und Aufwickeln auf einen Wickeldorn (22).

11. Verfahren nach Anspruch 10, wobei die Drehung der Wickelachse (A2) um die Übertragungsachse (A1) der Übertragungsvorrichtung (5) die Drehung der Wickelachse (A2) der Aufnahmevorrichtung (14) um einen Winkel zwischen 30° und 270° um die Übertragungsachse (A1) der Übertragungsvorrichtung (5) umfasst.

12. Verfahren nach Anspruch 10 oder 11, wobei das Übertragen jedes streifenförmigen Elements (100) von der jeweiligen Übertragungsvorrichtung (5) zu einer jeweiligen Aufnahmevorrichtung (14) ferner das Drehen der Übertragungsvorrichtung (5) um ihre eigene Übertragungsachse (A1) umfasst.

13. Verfahren nach Anspruch 10 bis 12, wobei das Drehen der Wickelachse (A2) um die Übertragungsachse (A1) der Übertragungsvorrichtung (5) ferner das Drehen der Wickelachse (A2) der Aufnahmevorrichtung (14) um eine Stützachse (A5) für die Aufnahmevorrichtung (14) parallel zu und mit einer Distanz zu der Wickelachse (A2) umfasst.

14. Verfahren nach Anspruch 13, ferner umfassend das Drehen der Stützachse (A5) um eine Transportachse (A4), um zu bewirken, dass sich die Stützachse (A5) entlang eines Ladewegs (LP) bewegt, auf dem die Übertragungsvorrichtungen (5) einander folgen.

15. Verfahren nach Anspruch 13, wobei das Übertragen jedes streifenförmigen Elements (100) von der jeweiligen Übertragungsvorrichtung (5) zu einer jeweiligen Aufnahmevorrichtung (14) das Verschieben der Übertragungsachse (A1) der Übertragungsvorrichtung (5) weg von der Transportachse (A4) während der Drehung der Wickelachse (A2) um die Übertragungsachse (A1) umfasst.

## Revendications

1. Appareil d'enroulement (1) pour l'enroulement d'un ou de plusieurs séparateurs en forme de bande et de feuilles d'électrodes ensemble, comprenant :
un poste de chargement (LS) ;
une pluralité de dispositifs de transfert (5) placés dans ledit poste de chargement (LS) et le long d'un chemin de chargement (LP), dans lequel chaque dispositif de transfert (5) est rotatif autour de son propre axe de transfert (A1) et est configuré pour recevoir et transférer une feuille d'électrode ou un séparateur en forme de bande ;
une pluralité de dispositifs de collecte (14), chacun desquels est conçu pour faire face à un dispositif de transfert (5) respectif dans le poste de chargement (LS) pour recevoir une feuille d'électrode ou un séparateur en forme de bande, chaque dispositif de collecte (14) étant rotatif autour de son propre axe d'enroulement (A2) ;
au moins un mandrin d'enroulement (22) pour l'enroulement de feuilles d'électrodes et de séparateurs en forme de bande reçus en provenance de ladite pluralité de dispositifs de collecte (14) ensemble ;
dans lequel, lorsqu'un dispositif de collecte (14) fait face à un dispositif de transfert (5) respectif, le dispositif de collecte (14) effectue une rotation autour de son propre axe d'enroulement (A2) et ledit axe d'enroulement (A2) effectue une rotation autour de l'axe de transfert (A1) du dispositif de transfert (5).

2. Appareil d'enroulement (1) selon la revendication 1, dans lequel, lorsqu'un dispositif de collecte (14) fait face à un dispositif de transfert (5) respectif, l'axe d'enroulement (A2) du dispositif de collecte (14) effectue une rotation d'un angle compris entre 30° et 270° autour de l'axe de transfert (A1) du dispositif de transfert (5).

3. Appareil d'enroulement (1) selon la revendication 1 ou 2, dans lequel lorsqu'un dispositif de collecte (14) fait face à un dispositif de transfert (5) respectif, le dispositif de transfert (5) effectue une rotation autour de son propre axe de transfert (A1).

4. Appareil d'enroulement (1) selon l'une quelconque des revendications précédentes, comprenant au moins un premier groupe de collecte (13a) comprenant une structure de support (20) sur laquelle ladite pluralité de dispositifs de collecte (14) est agencée ; chaque dispositif de collecte (14) étant rotatif autour de son propre axe d'enroulement (A2) par rapport à la structure de support (20).

5. Appareil d'enroulement (1) selon la revendication 4, dans lequel ladite structure de support (20) effectue une rotation autour de son propre axe de support (A5) lorsqu'un dispositif de collecte (14) fait face à un dispositif de transfert (5) respectif.

6. Appareil d'enroulement (1) selon la revendication 4 ou 5, dans lequel ladite structure de support (20) est rotative autour d'un axe de transport (A4) pour se déplacer le long dudit chemin de chargement (LP) dans le poste de chargement (LS) ; ledit axe de support (A5) de la structure de support (20) étant en rotation autour dudit axe de transport (A4).

7. Appareil d'enroulement (1) selon l'une quelconque des revendications précédentes, dans lequel l'axe de transfert (A1) de chaque dispositif de transfert (5) est apte à être déplacé en translation transversalement au chemin de chargement (LP) pendant une rotation de l'axe d'enroulement (A2) d'un dispositif de collecte (14) autour de l'axe de transfert (A1) du dispositif de transfert (5).

8. Appareil d'enroulement (1) selon la revendication 6, dans lequel l'axe de transfert (A1) de chaque dispositif de transfert (5) se déplace en translation en éloignement par rapport à l'axe de transport (A4) de la structure de support (20) du dispositif de collecte (14) pendant une rotation de l'axe d'enroulement (A2) d'un dispositif de collecte (14) autour de l'axe de transfert (A1) du dispositif de transfert (5).

9. Appareil d'enroulement (1) selon la revendication 4, comprenant un chemin de déroulement (UP) sur lequel se déplace ledit premier groupe de collecte (13a) après s'être déplacé le long du chemin de chargement (LP) ; les dispositifs de collecte (14) transférant à un mandrin d'enroulement (22) des feuilles d'électrode et des séparateurs en forme de bande tout en se déplaçant le long du chemin de déroulement (UP).

10. Procédé pour l'enroulement d'un ou de plusieurs séparateurs en forme de bande et de feuilles d'électrodes ensemble comprenant :
l'introduction d'éléments en forme de bande (100) définissant chacun une feuille d'électrode ou un séparateur en forme de bande dans des dispositifs de transfert (5) respectifs rotatifs autour de leurs propres axes de transfert (A1) ;
le transfert de chaque élément en forme de bande (100), du dispositif de transfert (5) respectif à un dispositif de collecte (14) respectif par la rotation du dispositif de collecte (14) autour de son propre axe d'enroulement (A2) et par la rotation dudit axe d'enroulement (A2) autour de l'axe de transfert (A1) du dispositif de transfert (5) ;
le déroulement de manière simultanée des éléments en forme de bande (100) à partir de chaque dispositif de collecte (14) et l'enroulement de ceux-ci sur un mandrin d'enroulement (22).

11. Procédé selon la revendication 10, dans lequel la rotation dudit axe d'enroulement (A2) autour de l'axe de transfert (A1) du dispositif de transfert (5) comprend la rotation de l'axe d'enroulement (A2) du dispositif de collecte (14) d'un angle compris entre 30° et 270° autour de l'axe de transfert (A1) du dispositif de transfert (5).

12. Procédé selon la revendication 10 ou 11, dans lequel le transfert de chaque élément en forme de bande (100) du dispositif de transfert (5) respectif à un dispositif de collecte (14) respectif comprend en outre la rotation du dispositif de transfert (5) autour de son propre axe de transfert (A1).

13. Procédé selon l'une quelconque des revendications 10 à 12, dans lequel la rotation dudit axe d'enroulement (A2) autour de l'axe de transfert (A1) du dispositif de transfert (5) comprend en outre la rotation de l'axe d'enroulement (A2) du dispositif de collecte (14) autour d'un axe de support (A5) pour le dispositif de collecte (14) parallèle à l'axe d'enroulement (A2) et à distance de celui-ci.

14. Procédé selon la revendication 13, comprenant en outre la rotation dudit axe de support (A5) autour d'un axe de transport (A4) afin d'amener ledit axe de support (A5) à se déplacer le long d'un chemin de chargement (LP) le long duquel lesdits dispositifs de transfert (5) se suivent.

15. Procédé selon la revendication 13, dans lequel le transfert de chaque élément en forme de bande (100) du dispositif de transfert (5) respectif à un dispositif de collecte (14) respectif comprend le déplacement en translation de l'axe de transfert (A1) du dispositif de transfert (5) en éloignement par rapport audit axe de transport (A4) pendant la rotation de l'axe d'enroulement (A2) autour de l'axe de transfert (A1).
